(19)

**Europäisches Patentamt**
**European Patent Office**
**Office européen des brevets**

(11) **EP 4 170 624 B1**

(12) **EUROPEAN PATENT SPECIFICATION**

(45) Date of publication and mention
of the grant of the patent:
**02.04.2025  Bulletin 2025/14**

(21) Application number: **21826634.4**

(22) Date of filing: **14.04.2021**

(51) International Patent Classification (IPC):
*G08G 1/0968* (2006.01)   *G08G 1/16* (2006.01)
*B60W 40/06* (2012.01)   *B60W 40/10* (2012.01)
*B60W 60/00* (2020.01)

(52) Cooperative Patent Classification (CPC):
**G08G 1/163; B60W 10/04; B60W 10/18;**
**B60W 10/20; B60W 30/18163; B60W 50/0097;**
**B60W 60/0013; G08G 1/165; G08G 1/166;**
**G08G 1/167;** B60W 2552/05; B60W 2552/35

(86) International application number:
**PCT/JP2021/015482**

(87) International publication number:
**WO 2021/256069 (23.12.2021 Gazette 2021/51)**

(54) **VEHICLE MOTION CONTROL DEVICE AND VEHICLE MOTION CONTROL METHOD**

VORRICHTUNG UND VERFAHREN ZUR FAHRZEUGBEWEGUNGSSTEUERUNG

DISPOSITIF DE COMMANDE DE MOUVEMENT DE VÉHICULE ET PROCÉDÉ DE COMMANDE DE
MOUVEMENT DE VÉHICULE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **17.06.2020   JP 2020104290**

(43) Date of publication of application:
**26.04.2023   Bulletin 2023/17**

(73) Proprietor: **Hitachi Astemo, Ltd.**
**Ibaraki 312-8503 (JP)**

(72) Inventors:
• **NASU Shingo**
**Tokyo 100-8280 (JP)**

• **HIRAO Ryusuke**
**Hitachinaka-shi, Ibaraki 312-8503 (JP)**
• **UENO Kentarou**
**Hitachinaka-shi, Ibaraki 312-8503 (JP)**
• **YAMASAKI Masaru**
**Tokyo 100-8280 (JP)**

(74) Representative: **MERH-IP Matias Erny Reichl**
**Hoffmann**
**Patentanwälte PartG mbB**
**Paul-Heyse-Straße 29**
**80336 München (DE)**

(56) References cited:
DE-A1- 102012 017 118     DE-A1- 102012 018 122
DE-B3- 102019 003 430     JP-A- 2016 053 846
JP-A- 2017 165 184     US-A1- 2019 001 965

## Description

Technical Field

The present invention relates to a vehicle motion control device and a vehicle motion control method for generating a travel path as a target of a vehicle and controlling a motion of the vehicle based on the generated travel path.

Background Art

There is known an autonomous driving technique of generating a travel path configured by information such as a travel route as a target of a vehicle and the speed of the vehicle, based on a road situation on a course of the vehicle or a state of the vehicle acquired using a map, communication, or a sensor, and controlling a power train, a brake, or a steering such that the vehicle follows the generated travel path.

As a method of generating a travel path in a case where there is unevenness that can be passed by on a course of a vehicle, PTL 1 discloses a method of reducing a vertical acceleration generated above a spring of a vehicle and improving ride comfort by performing a vehicle speed control of increasing or decreasing a vehicle speed to avoid resonance of vibration generated when passing through the unevenness with the portion above the spring of the vehicle. PTL 2 discloses a method to generate a target trajectory when a bump is detected to avoid driving over the bump with both wheels of an axle at a time.

PTL 3 discloses a method to enhance the autonomous driving experience by detecting unevenness on the driveway and planning a target trajectory based on this information.

Citation List

Patent Literature

PTL 1: JP 2009-248909 A
PTL 2: DE 10 2019 003 430 B
PTL 3: DE 10 2012 018 122 A

Summary of Invention

Technical Problem

However, in the method disclosed in PTL 1, the longitudinal acceleration caused by the increase or decrease of the vehicle speed is not considered. Thus, the longitudinal acceleration becomes significant depending on the increase or decrease of the vehicle speed and the magnitude of the unevenness, and thus the ride comfort may be deteriorated as compared with the case where the vehicle speed control is not performed. In addition, generation of a travel path for avoiding unevenness, and a possibility that a suspension is damaged by vibration generated below the spring of the vehicle when passing by the unevenness, and the like are not taken into consideration, and in some cases, a necessary and sufficient ride comfort and safety cannot be obtained with respect to the road situation on the course of the vehicle and the state of the vehicle.

Therefore, an object of the present invention is to provide a vehicle motion control device and a vehicle motion control method for generating a travel path capable of realizing comfortable ride comfort and high safety with a small physical quantity related to a vehicle behavior such as a longitudinal acceleration, a lateral acceleration, and a vertical acceleration generated when a vehicle passes or avoids with respect to a predetermined region such as unevenness on a course of a vehicle.

Solution to Problem

In order to solve the above problem, according to the present invention, a vehicle motion control device includes a vehicle behavior prediction portion that predicts a physical quantity related to a vehicle behavior that occurs when a vehicle maintains a reference route toward a predetermined region on a course and a physical quantity related to a vehicle behavior that occurs when the vehicle shifts to an avoidance route for avoiding the predetermined region, and a path generation portion that generates a travel path defined by the reference route or the avoidance route in which the physical quantity is smaller than a defined value.

In addition, according to the present invention, a vehicle motion control method includes a step of predicting a physical quantity related to a vehicle behavior that occurs when a vehicle maintains a reference route toward a predetermined region on a course, a step of predicting a physical quantity related to a vehicle behavior that occurs when the vehicle shifts to an avoidance route for avoiding the predetermined region, and a step of generating a travel path defined by the reference route or the avoidance route in which the physical quantity is smaller than a defined value.

Advantageous Effects of Invention

According to the vehicle motion control device or the vehicle motion control method of the present invention, it is possible to realize comfortable ride comfort and high safety with a small physical quantity related to a vehicle behavior such as a longitudinal acceleration, a lateral acceleration, and a vertical acceleration generated when a vehicle passes or avoids with respect to a predetermined region such as unevenness on a course of a vehicle.

Brief Description of Drawings

[FIG. 1] FIG. 1 is a diagram illustrating a configuration example of an in-vehicle system 1 including a vehicle motion control device 2 according to an embodiment.
[FIG. 2] FIG. 2 is a diagram illustrating an example of functional blocks of a travel path generation unit 22 according to the embodiment.
[FIG. 3] FIG. 3 is a diagram illustrating an example of travel status information input to the travel path generation unit 22 according to the embodiment.
[FIG. 4] FIG. 4 is a diagram illustrating a front and rear two-wheel model according to the embodiment.
[FIG. 5] FIG. 5 is a flowchart illustrating an outline of processing of an action determination portion 22e.
[FIG. 6] FIG. 6 is a flowchart illustrating an outline of processing of the action determination portion 22e.
[FIG. 7] FIG. 7 is a flowchart illustrating an outline of processing of the action determination portion 22e.
[FIG. 8] FIG. 8 is a diagram illustrating an example of a processing result by the travel path generation unit 22 according to the embodiment.
[FIG. 9] FIG. 9 is a diagram illustrating an example of a processing result by a vehicle 60 equipped with the in-vehicle system 1 including the vehicle motion control device 2 according to the embodiment.
[FIG. 10] FIG. 10 is a flowchart illustrating an outline of processing of the action determination portion 22e.

Description of Embodiments

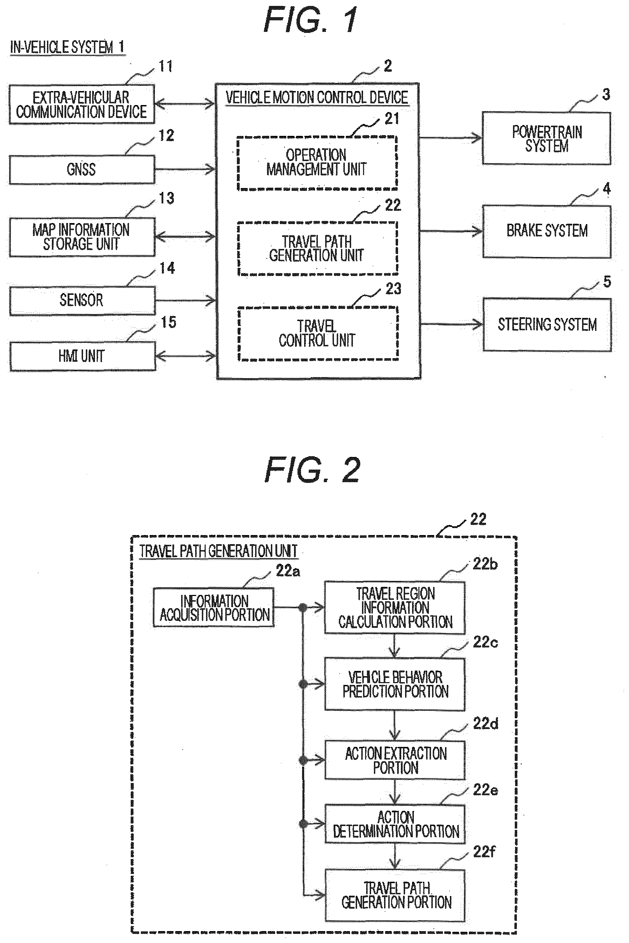

Hereinafter, an in-vehicle system including a vehicle motion control device according to an embodiment of the present invention will be described in detail with reference to FIGS. 1 to 10.

<In-vehicle System 1>

FIG. 1 is a diagram illustrating a configuration example of an in-vehicle system 1 including a vehicle motion control device 2 according to the present embodiment. As illustrated herein, the in-vehicle system 1 includes an extra-vehicular communication device 11, a GNSS 12, a map information storage unit 13, a sensor 14, an HMI unit 15, a vehicle motion control device 2, a power train system 3, a brake system 4, and a steering system 5.
The in-vehicle system 1 is mounted on a vehicle and performs vehicle motion control such as autonomous driving and driving support of the vehicle.
The extra-vehicular communication device 11 performs inter-vehicle communication and road-to-vehicle communication with another vehicle by wireless communication, and transmits and receives information on a vehicle, a surrounding environment, and the like.
The GNSS 12 receives radio waves transmitted from an artificial satellite such as a quasi-zenith satellite or a GPS satellite, and acquires information on the position of the vehicle and the like.
In addition to general road information used in a navigation system or the like, the map information storage unit 13 stores road information such as a width and a curvature of a road, and surrounding environment information such as a traveling state, a road surface condition, and a traffic condition of other vehicles. The surrounding environment information is sequentially updated by information acquired by vehicle-to-vehicle communication or road-to-vehicle communication using the extra-vehicular communication device 11.
The sensor 14 includes a sensor that detects an operation by a driver, a speed, an acceleration, an angular velocity, a steering angle, and the like of the vehicle, in addition to an external recognition sensor that detects information of a surrounding environment, such as an image sensor, a millimeter wave radar, and lidar. The surrounding environment information detected by the external recognition sensor detects various objects such as obstacles, other vehicles, pedestrians, signs, lane lines, and buildings existing around the vehicle. For example, the sensor 14 recognizes a lane boundary line, a lane outside line, and the like based on a difference in luminance between a white line and a road surface of image data captured by the image sensor.

The HMI unit 15 displays information necessary for the user from various types of information obtained by the extra-vehicular communication device 11, the sensor 14, and the like on a display and generates a voice guidance, an alarm, and the like with a speaker, in addition to receiving an input operation of the user such as selection of a travel mode and setting of a destination.

The vehicle motion control device 2 includes an operation management unit 21, a travel path generation unit 22, and a travel control unit 23. The operation management unit 21, the travel path generation unit 22, and the travel control unit 23 are computers that integrally control a vehicle and include hardware such as an arithmetic device such as a CPU, a main storage device such as a semiconductor memory, an auxiliary storage device, and a communication device. The arithmetic device executes a program loaded in the main storage device to implement various functions. Hereinafter, such well-known techniques will be appropriately omitted. In the present embodiment, a configuration in which the operation management unit 21, the travel path generation unit 22, and the travel control unit 23 are separated has been described for easy understanding of the present invention. However, when the present invention is adopted for an actual vehicle, the functions may be realized by a host controller.

The operation management unit 21 generates position information of the vehicle and information on the vehicle behavior and various objects existing around the vehicle based on the information acquired by the extra-vehicular communication device 11, the GNSS 12, the map information storage unit 13, and the sensor 14. In addition, the operation management unit 21 periodically transmits the position information, the surrounding environment information, and the information regarding the vehicle behavior via the extra-vehicular communication device 11, and sequentially updates the map information storage unit 13. Further, the operation management unit 21 sets the route from the current position of the vehicle to the destination based on the information such as the destination acquired by the HMI unit 15 in addition to the position information, the surrounding environment information, and the information related to the vehicle behavior. The information generated or set by the operation management unit 21 is referred to as travel status information below.

The travel control unit 23 sets a target driving force, a target braking force, a target steering angle, and the like so that the vehicle travels to follow the travel path output from the travel path generation unit 22, and controls the power train system 3, the brake system 4, and the steering system 5.

The power train system 3 controls a driving force generated by an internal combustion engine, an electric motor, or the like based on an operation of the driver or a target driving force output from the travel control unit 23.

The brake system 4 controls a braking force generated by a brake caliper or the like based on an operation of the driver or a target braking force output from the travel control unit 23.

The steering system 5 controls the steering angle of the wheel based on the operation of the driver and the target steering angle output from the travel control unit 23.

<Travel Path Generation Unit 22>

Next, an example of functional blocks of the travel path generation unit 22 will be schematically described with reference to FIGS. 2 to 4.

The travel path generation unit 22 generates a travel path defined by information such as a travel route as a target of the vehicle and the speed of the vehicle by using, as an input, the above-described travel status information. The travel path generation unit 22 includes an information acquisition portion 22a, a travel region information calculation portion 22b, a vehicle behavior prediction portion 22c, an action extraction portion 22d, an action determination portion 22e, and a travel path generation portion 22f.

The information acquisition portion 22a acquires the travel status information from the operation management unit 21.

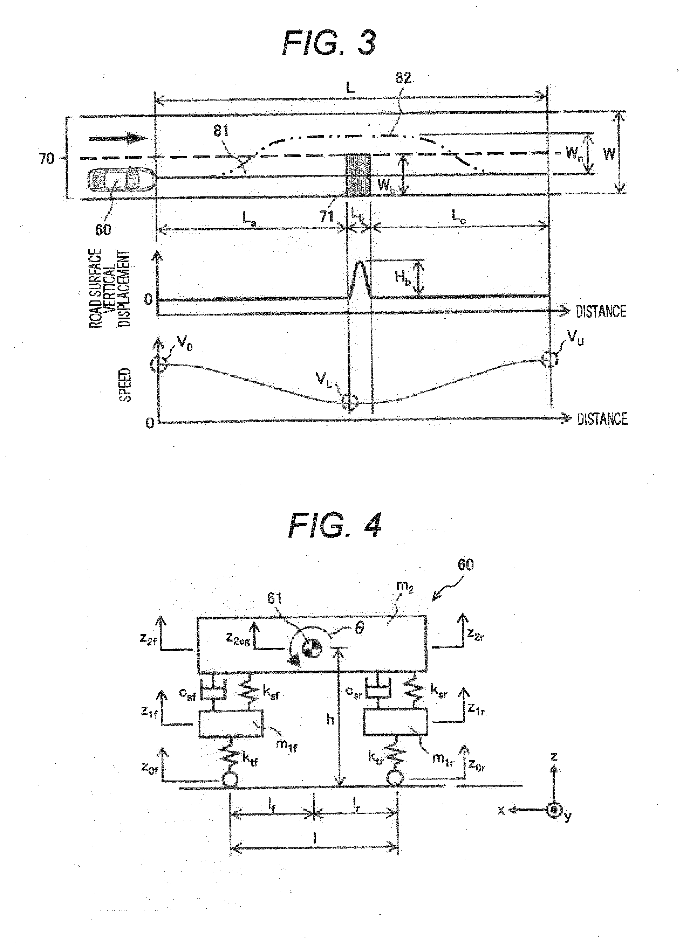

The travel region information calculation portion 22b uses, as an input, the travel status information output from the information acquisition portion 22a to calculate a region in which the vehicle can travel without coming into contact with obstacles such as other vehicles, pedestrians, and buildings on the course, a lateral movement distance, a target speed, a road surface friction coefficient, and the like of the vehicle, which are required to avoid unevenness and the like. An example of travel region information output from the travel region information calculation portion 22b will be schematically described with reference to FIG. 3.

In the situation illustrated in FIG. 3, a vehicle 60 is traveling on a road surface 70 having two lanes from the left side to the right side in FIG. 3, and there is a rough road (referred to as a "predetermined region 71" below) such as unevenness on the course of the vehicle 60. Here, as an example of the travel region information, the distance from the vehicle 60 to the farthest end detectable by the sensor 14 is denoted by L, and the width of the road surface 70 which is also the width of a travelable region in the situation of FIG. 3 is denoted by W. The distance from the vehicle 60 to the predetermined region 71 is denoted by $L_a$, the length of the predetermined region 71 is denoted by $L_b$, and the distance from the predetermined region 71 to the farthest end detectable by the sensor 14 is denoted by $L_c$. The lateral travel distance of the vehicle 60 necessary for avoiding the predetermined region 71 is denoted by $W_n$, the width of the predetermined region 71 is denoted by $W_b$, and the height of a protrusion of the predetermined region 71 is denoted by Hb. The current speed of the vehicle 60 is denoted by $V_0$, and the upper limit speed and the lower limit speed when the vehicle travels on the road surface 70 defined in advance are denoted by $V_U$ and $V_L$, respectively. The travel path generation unit 22 generates a reference route 81 toward the predetermined region 71 or an avoidance route 82 for avoiding the predetermined region 71, based on the travel region information.

The predetermined region 71 may be an obstacle that cannot pass, such as another vehicle at a lower speed than the vehicle 60, in addition to unevenness, a puddle, or a rough road such as a frozen road that can pass, and the type of the predetermined region 71 is not limited. When the predetermined region 71 is another vehicle at a low speed, the target speed at which the relative speed with respect to the predetermined region 71 becomes 0 is defined such that the vehicle 60 does not come into contact with the predetermined region 71 even though the vehicle maintains reference route 81. In addition, the travel region information calculation portion 22b may output, as the travelable region, a risk potential map calculated in consideration of a movement range of another vehicle and a reach range when a pedestrian runs -out. In addition, the avoidance route 82 illustrated in FIG. 3 indicates a route that returns to the original right lane after avoiding the predetermined region 71 by changing the lane to the left lane, but may be a route that does not return to the original lane or a route that avoids or crosses the predetermined region 71 in the same lane, and the shape of the avoidance route 82 is not limited.

The vehicle behavior prediction portion 22c uses, as an input, the travel status information output from information acquisition portion 22a and the travel region information output from travel region information calculation portion 22b, to predict a physical quantity related to the vehicle behavior such as an acceleration when the reference route 81 is maintained and when the route is switched to the avoidance route 82. An example of the physical quantity related to the vehicle behavior, which is predicted by the vehicle behavior prediction portion 22c will be schematically described with reference to FIG. 4. FIG. 4 is a diagram when the vehicle 60 is viewed with the vertical displacement of the road surface from the left side, and is a diagram illustrating a front-rear two-wheel model in which a vehicle body, wheels, and the like are represented by mass points, and the mass points are connected by a spring or a shock absorber.

In a coordinate system, the front-rear direction of the vehicle is represented by an x-axis, the left-right direction of the vehicle is represented by a y-axis, and the up-down direction of the vehicle is represented by a z-axis. The front-shaft side and the rear-shaft side of the mass below the spring are denoted by $m_{1f}$ and $m_{1r}$, the mass above the spring is denoted by $m_2$, and the up-down displacement of the center of gravity above the spring 61 is denoted by $z_{2cg}$. The up-up displacements above the spring of the wheels are denoted by $z_{2f}$ and $z_{2r}$. The up-down displacements below the spring are denoted by $z_{1f}$ and $z_{1r}$, the road surface up-down displacement is denoted by $z_{0f}$ and $z_{0r}$, and the pitch angle of the center of gravity above the spring 61 is denoted by $\theta$. The suspension spring constants are denoted by $k_{sf}$ and $k_{sr}$, the suspension damping coefficients are denoted by $c_{sf}$ and $c_{sr}$, and the wheel base that is a distance between the front and rear wheel axles is denoted by l, the distances in the front-rear direction of the vehicle from the front and rear wheel axles to the center of gravity above the spring are denoted by $l_f$ and $l_r$, and the height of the center of gravity above the spring 61 is denoted by h.

In the vehicle behavior prediction portion 22c, information regarding the height of the road surface which is a portion of the travel region information, is input to this model, and the center of gravity above the spring, vertical accelerations above and below the spring on each wheel, and the suspension stroke amount which is the relative displacement in the vertical direction above and below the spring are calculated. In addition, the physical quantity related to the vehicle behavior, which is predicted by the vehicle behavior prediction portion 22c, may be a speed, an acceleration, a jerk, an angle, an angular velocity, and an angular acceleration in each degree of freedom of the vehicle in addition to the longitudinal acceleration, the lateral acceleration, and the vertical acceleration generated at the center of gravity above the spring. The physical quantity related to the vehicle behavior, which is predicted by the vehicle behavior prediction portion 22c, is not limited. In addition, the physical quantity related to the vehicle behavior, which is predicted by the vehicle behavior prediction portion 22c, may be performed not only for each of the passing and avoiding actions but also for a plurality of speed candidates defined between the upper limit speed $V_U$ and the lower limit speed $V_L$ illustrated in FIG. 3 and a plurality of lateral movement amount candidates required for avoidance defined between the widths W of the travelable regions. The condition as a prediction target of the vehicle behavior prediction portion 22c is not limited. In addition, in the present embodiment, the case of using the front-rear two-wheel model in consideration of the calculation load of the vehicle behavior prediction portion 22c has been schematically described. However, in a case where the unevenness height of the predetermined region 71 through which the left and right wheels of the vehicle 60 pass is different, it is desirable to use a four-wheel full vehicle model in which the motion around the y-axis direction, the x-axis, and the z-axis illustrated in FIG. 4 can be considered from the viewpoint of the prediction accuracy of the vertical motion. A method of predicting the physical quantity related to the vehicle behavior is not limited.

The action extraction portion 22d uses, as an input, the travel status information output from the information acquisition portion 22a and the physical quantity related to the vehicle behavior such as the acceleration output from the vehicle behavior prediction portion 22c, to extract and output an action in which the physical quantity related to the vehicle behavior is equal to or smaller than a vehicle limit among the candidates output from the vehicle behavior prediction portion 22c. Here, a specific example of the vehicle limit will be described. First, with respect to the planar motion of the vehicle, an acceleration that exceeds vehicle performance and a road surface friction coefficient of an engine, a tire, or the like cannot be generated. Thus, the acceleration based on the vehicle performance and the road surface friction coefficient becomes a vehicle limit. The planar synthetic acceleration, which is the acceleration related to the planar motion of the vehicle, can be calculated by the square root of the sum of squares of the longitudinal acceleration and the lateral acceleration. Next, with respect to the vertical motion of the vehicle, the upper limit values of the vertical accelerations above and below the spring on each wheel where the suspension of the vehicle is not damaged, and the suspension stroke amount are the vehicle limits. The upper limit value is, for example, about 1 G for the vertical acceleration above the spring on each wheel, about 20 G for the vertical acceleration below the spring on each wheel, and about 0.1 m for the suspension stroke amount although the suspension stroke amount varies depending on the shape of the suspension. In this manner, the action extraction portion 22d extracts and outputs only safe and feasible actions. In a case where there is no action in which the physical quantity related to the vehicle behavior is equal to or less than the vehicle limit, the passing action of decelerating at the longitudinal acceleration of the vehicle limit is extracted and output in consideration of safety.

The travel path generation portion 22f uses, as an input, the travel status information output from the information acquisition portion 22a and the information regarding the action output from the action determination portion 22e, to set a travel route and a speed on which the action determined by the action determination portion 22e is performed, and output the travel route and the speed as a travel path to the travel control unit 23.

<Processing of Action Determination Portion 22e>

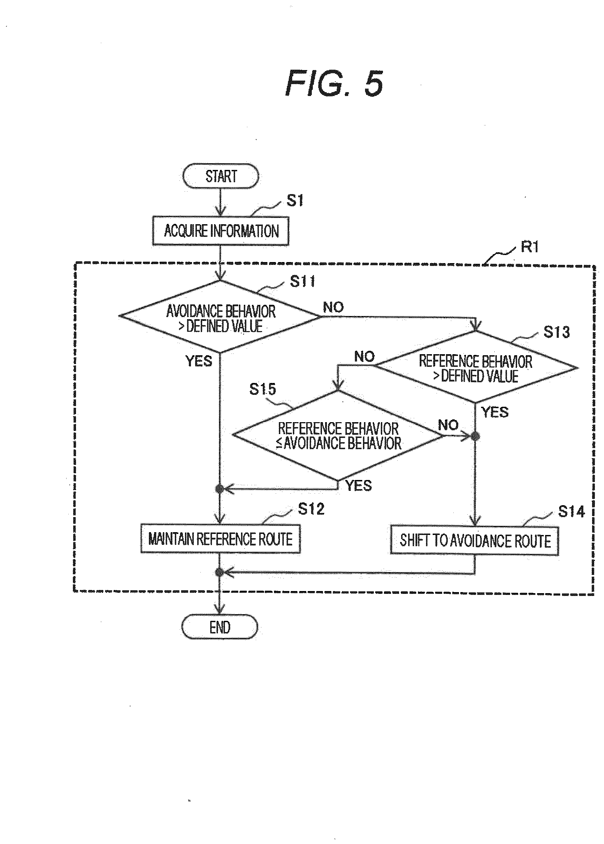

Next, an outline of processing of the action determination portion 22e will be described with reference to FIG. 5.

First, in Step S1, the action determination portion 22e acquires the travel status information output from the information acquisition portion 22a, the action in which the physical quantity related to the vehicle behavior output from the action extraction portion 22d becomes equal to or smaller than the vehicle limit, or the physical quantity related to the vehicle behavior that occurs in the passing action of decelerating at the longitudinal acceleration of the vehicle limit.

Then, in Step S11, the action determination portion 22e determines whether or not the physical quantity related to the vehicle behavior when the vehicle travels on the avoidance route 82 is greater than a defined value based on the information acquired in Step S1. When the physical quantity is greater than the defined value (YES in Step S11), the process proceeds to Step S12. When the physical quantity is equal to or smaller than the defined value (NO in Step S11), the process proceeds to Step S13. Here, the defined value may be a predetermined value determined in advance in consideration of ride comfort or the like, or a value of the vehicle limit based on the road surface friction coefficient acquired by the sensor 14 or the like, and the definition of the defined value is not limited.

In Step S12, the action determination portion 22e selects maintenance of the reference route 81 as the action of the vehicle 60. When there is no avoidance route 82 extracted by the action extraction portion 22d, the process proceeds to Step S12 to select the maintenance of the reference route 81.

On the other hand, in Step S13, the action determination portion 22e determines whether the physical quantity related to the vehicle behavior on the reference route is greater than the defined value based on the information acquired in Step S1 (Step S13). When the physical quantity is greater than the defined value (YES in Step S13), the process proceeds to Step S14. When the physical quantity is equal to or smaller than the defined value (NO in Step S13), the process proceeds to Step S15.

In Step S14, the action determination portion 22e selects the shift to the avoidance route 82 as the action of the vehicle 60. When there is no reference route 81 extracted by the action extraction portion 22d, the process proceeds to Step S14 to select the shift to the avoidance route 82.

On the other hand, in Step S15, the action determination portion 22e determines whether or not the physical quantity related to the vehicle behavior at the time of the reference route is equal to or smaller than the physical quantity related to the vehicle behavior at the time of the avoidance route based on the information acquired in Step S1. When the former is equal to or smaller than the latter (YES in Step S15), the process proceeds to Step S12. When the former is greater than the latter (NO in Step S15), the process proceeds to Step S14.

With the above processing, the action determination portion 22e selects either maintaining of the reference route 81 or shifting to the avoidance route 82 as the action of the vehicle 60.

<Processing Different from FIG. 5 in Action Determination Portion 22e>

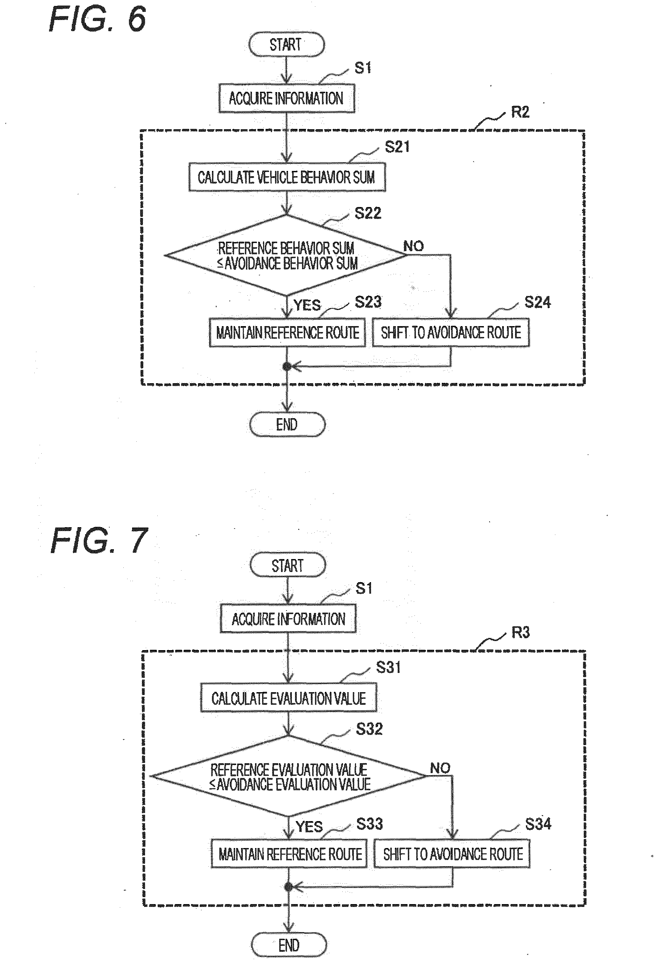

Next, an outline of processing of the action determination portion 22e will be described with reference to FIG. 6. Here, a difference from FIG. 5 will be described, and the same description as that of FIG. 5 will be omitted. The main difference between FIGS. 6 and 5 is that the action selection processing is changed from the method of performing the action selection processing based on the magnitude relationship between the physical quantity related to the vehicle behavior such as the acceleration and the defined value to the method of performing the action selection processing based on the sum of the physical quantities related to the vehicle behavior calculated from the acceleration and the like.

First, in Step S1, the action determination portion 22e acquires the information output from the information acquisition portion 22a and the action extraction portion 22d as in FIG. 5. In Step S21, the action determination portion 22e calculates the sum of physical quantities related to the vehicle behavior of the same dimension such as the acceleration based on the acquired information.

Then, in Step S22, the action determination portion 22e determines whether or not the sum of physical quantities related to the vehicle behavior at the time of the reference route calculated in Step S21 is equal to or smaller than the sum of physical quantities related to the vehicle behavior at the time of the avoidance route (Step S22). When the former is equal to or smaller than the latter (YES in Step S22), the process proceeds to Step S23 to select the maintenance of the reference route 81. When the former is greater than the latter (NO in Step S22), the process proceeds to Step S24 to select the shift to the avoidance route 82.

<Processing Different from FIGS. 5 and 6 of Action Determination Portion 22e>

Next, an outline of processing of the action determination portion 22e will be described with reference to FIG. 7. Here, a difference from FIGS. 5 and 6 will be described, and the same description as that of FIGS. 5 and 6 will be omitted. The main difference between FIGS. 7, and 5 and 6 is that the action selection processing is changed from the method of performing the action selection processing based on a sum of physical quantities related to the vehicle behavior calculated from the magnitude relationship between the physical quantity related to the vehicle behavior such as the acceleration and the defined value, the acceleration, and the like to the method of performing the action selection processing based on an evaluation value calculated from the acceleration and the like.

First, the action determination portion 22e acquires the information output from the information acquisition portion 22a and the action extraction portion 22d in Step S1, similarly to FIGS. 5 and 6. In Step S31, the action determination portion 22e calculates the evaluation value Q by using an evaluation function expressed by (Expression 1) or (Expression 2) with the physical quantity related to the vehicle behavior such as the acceleration as an input based on the acquired information.

[Math. 1]

$$Q = \sqrt{A\left(\frac{G_{xm}}{G_{xs}}\right)^2 + B\left(\frac{G_{ym}}{G_{ys}}\right)^2 + C\left(\frac{G_{zm}}{G_{zs}}\right)^2}$$

(Expression 1)

[Math. 2]

$$Q = \sqrt{A\left(\frac{G_{xm}}{G_{xs}}\right)^2 + B\left(\frac{G_{ym}}{G_{ys}}\right)^2 + C\left(\frac{G_{zm}}{G_{zs}}\right)^2 + D\left(\frac{t_m}{t_s}\right)^2}$$

(Expression 2)

Here, A, B, C, and D in (Expression 1) and (Expression 2) are weighting factors. $G_{xm}$, $G_{ym}$, and $G_{zm}$ are maximum accelerations (front and rear, side, up and down), and $t_m$ is a movement time caused by an action in which the vehicle 60 passes or avoids the predetermined region 71. $G_{xs}$, $G_{ys}$, and $G_{zs}$ are acceleration defined values (front and rear, side, up and down), and $t_s$ is a movement time caused by an action in which the vehicle 60 passes or avoids the predetermined region 71 at the current speed $V_0$. The numerator of the evaluation function such as $G_{xm}$ shown in (Expression 1) or (Expression 2) may be not only the acceleration but also the distance, the velocity, the jerk, the angular velocity, and the angular acceleration, or may be not only the maximum value but also the integral value. The physical quantity related to the vehicle behavior defined in the numerator of the evaluation function is not limited. In addition, the denominator of the evaluation function such as $G_{xs}$ shown in (Expression 1) and (Expression 2) may be not only the acceleration but also the distance, the speed, the jerk, the angular velocity, and the angular acceleration, and may be not only a predetermined defined value but also a value based. on the road surface friction coefficient, the ride comfort, the vehicle state, and the like output from the travel region information calculation portion 22b. The coefficient regarding the vehicle behavior defined in the denominator of the evaluation function is not limited.

Then, in Step 32, the action determination portion 22e determines whether or not the evaluation value at the time of the reference route calculated in Step S31 is equal to or smaller than the evaluation value at the time of the avoidance route (Step S32). When the former is equal to or smaller than the latter (YES in Step S32), the process proceeds to Step S33 to select the maintenance of the reference route 81. When the former is greater than the latter (NO in Step S32), the process proceeds to Step S34 to select the shift to the avoidance route 82.

<Effects of Present Embodiment>

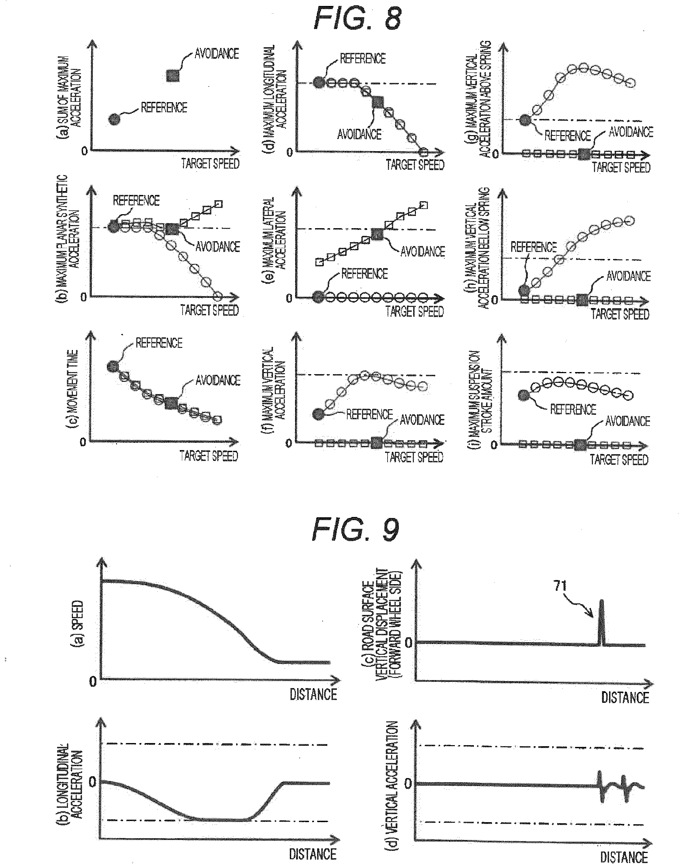

Next, an example of an effect achieved by the vehicle 60 equipped with the in-vehicle system 1 including the vehicle motion control device 2 described above will be described with reference to FIGS. 8 and 9. FIGS. 8 and 9 are graphs illustrating effects when the flowchart illustrated in FIG. 6 of the present embodiment is applied in the situation illustrated in FIG. 3.

In each graph of FIG. 8, the horizontal axis indicates the target speed, and the vertical axis indicates, in order from the upper left, (a) the sum of the maximum accelerations, (b) the maximum planar synthetic acceleration, (c) the movement time, (d) the maximum longitudinal acceleration, (e) the maximum lateral acceleration, (f) the maximum vertical acceleration, (g) the maximum vertical acceleration above the spring, (h) the maximum vertical acceleration below the spring, and (i) the maximum suspension stroke amount. In each graph, a "white circle" and a "black circle" indicate data corresponding to the reference route 81. A "white square" and a "black square" indicate data corresponding to the avoidance route, and a one-dot chain line indicates the defined value or an upper limit value.

First, under the circumstances, there are two vehicle behaviors "black circles" and "black squares" in FIG. 8 as the vehicle behavior that allows the vehicle to safely travel on the reference route and the avoidance route in which (b), (g), (h), and (i) are equal to or smaller than the upper limit value that is the vehicle limit. Therefore, the action extraction portion 22d extracts the two actions.

Since the sum of the maximum accelerations of the two vehicle behaviors is smaller than the avoidance route in which the reference route of the "black circle" is the "black square" as illustrated in (a) of FIG. 8, the action determination portion 22e determines that the traveling of the reference route 81 at the target speed indicated by the "black circle" is the action with the safety and the best ride comfort.

FIG. 9 is a graph showing a vehicle behavior of passage selected in FIG. 8, and illustrates changes with respect to distances of (a) the speed, (b) the longitudinal acceleration, (c) the road surface vertical displacement (front wheel side), and (d) the vertical acceleration. The one-dot chain line in FIG. 9 indicates the upper limit and the lower limit of the specified range. The longitudinal acceleration and the lateral acceleration generated when the vehicle passes through the predetermined region 71 illustrated in (c) are within the range of the defined values as illustrated in (b) and (d), so that the travel path that safely realizes the set ride comfort can be generated.

<Example of Flowchart Different from FIGS. 5 to 7 of Action Determination Portion 22e>

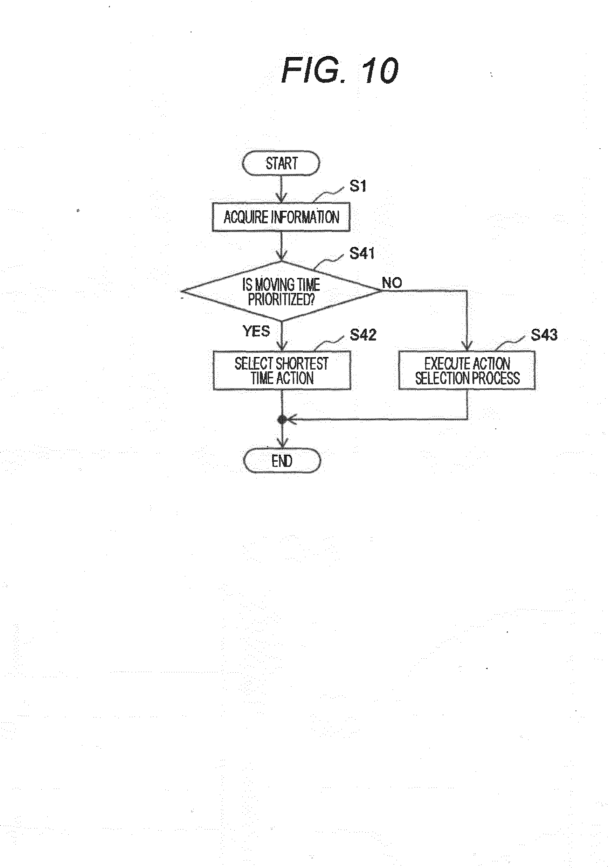

Next, an outline of processing of the action determination portion 22e will be described with reference to FIG. 10. Here, a difference from FIGS. 5 to 7 will be described, and the same description as that of FIGS. 5 to 7 will be omitted. The main difference between FIG. 10, and FIGS. 5 to 7 is that processing of selecting an action corresponding to a movement time priority mode among the travel modes set by the operation management unit 21 is added.

First, in Step S1, the action determination portion 22e acquires information output from the information acquisition portion 22a and the action extraction portion 22d, as in FIGS. 5 to 7.

Next, in Step S41, the action determination portion 22e determines whether or not the travel mode set by the operation management unit 21 is the movement time priority mode. When the travel mode is the movement time priority mode (YES in Step S41), the process proceeds to Step S42 to select an action for the shortest time. When the travel mode is not the movement time priority mode, the process proceeds to Step S43 to perform action selection processing. In Step S43, the action selection processing of any one of the routine R1 illustrated in FIG. 5, the routine R2 illustrated in FIG. 6, and the routine R3 illustrated in FIG. 7 is performed. The behavior for the shortest time selected in Step S42 is, for example, traveling on the avoidance route indicated by the "black square" that is equal to or smaller than the vehicle limit and has the shortest movement time in (c) of FIG. 8 in a case of a situation similar to that in FIG. 8.

The above description is an example of the method of generating the travel path as the target of the vehicle and the method of controlling a motion of the vehicle in the present invention. By using the in-vehicle system 1 including the vehicle motion control device 2 having such a configuration, it is possible to realize comfortable ride comfort and high safety with a small physical quantity related to a vehicle behavior such as the longitudinal acceleration, the lateral acceleration, and the vertical acceleration occurring when passing or avoiding the predetermined region on the course of the vehicle.

Reference Signs List

| | |
|---|---|
| 1 | in-vehicle system |
| 2 | vehicle motion control device |
| 21 | operation management unit |
| 22 | travel path generation unit |
| 22a | information acquisition portion |
| 22b | travel region information calculation portion |
| 22c | vehicle behavior prediction portion |
| 22d | action extraction portion |
| 22e | action determination portion |
| 22f | travel path generation portion |
| 23 | travel control unit |
| 3 | power train system |
| 4 | brake system |
| 5 | steering system |
| 11 | extra-vehicular communication device |
| 12 | GNSS |
| 13 | map information storage unit |
| 14 | sensor |
| 15 | HMI unit |
| 60 | vehicle |
| 70 | road surface |
| 71 | predetermined region |
| 81 | reference route |
| 82 | avoidance route |

**Claims**

1. A vehicle motion control device (2) comprising:

   a vehicle behavior prediction portion (22c) that predicts a physical quantity related to a vehicle behavior that occurs when a vehicle maintains a reference route (81) toward a predetermined region (71) on a course and a physical quantity related to a vehicle behavior that occurs when the vehicle shifts to an avoidance route (82) for avoiding the predetermined region (71); and
   a path generation portion (22f) that generates a travel path defined by the reference route (81) or the avoidance route (82) in which the physical quantity is smaller than a defined value.

2. The vehicle motion control device (2) according to claim 1, wherein the path generation portion (22f) generates a travel path in which a sum of the physical quantities is minimized.

3. The vehicle motion control device (2) according to claim 2, wherein
   the path generation portion (22f) generates a travel path for maintaining the reference route (81) in a case where a sum of physical quantities related to a vehicle behavior that occurs at the time of maintaining the reference route (81) is equal to a sum of physical quantities related to a vehicle behavior that occurs at the time of shifting to the avoidance route (82).

4. The vehicle motion control device (2) according to claim 1, wherein the path generation portion (22f) generates a travel path in which an evaluation value (Q) calculated by an evaluation function in which a physical quantity predicted by the vehicle behavior prediction portion (22c) is set as a numerator, and a coefficient related to a vehicle behavior is set as a denominator is minimized.

5. The vehicle motion control device (2) according to claim 4, wherein when an evaluation value at time of maintaining the reference route (81) is equal to an evaluation value at time of shifting to the avoidance route (82), the path generation portion (22f) generates a travel path for maintaining the reference route (81).

6. The vehicle motion control device (2) according to claim 4 or 5, wherein the coefficient is a coefficient in consideration of at least one of a traveling road surface state, a vehicle state, and ride comfort.

7. The vehicle motion control device (2) according to claim 1, wherein, when both the physical quantity related to the vehicle behavior that occurs at the time of maintaining the reference route (81) and the physical quantity related to the vehicle behavior that occurs at the time of shifting to the avoidance route (82) are greater than a defined value, the path generation portion (22f) generates a travel path that passes through the reference route (81) and has the minimum physical quantity.

8. The vehicle motion control device (2) according to claim 1, wherein the physical quantity is any one of time, displacement, a speed, an acceleration, a jerk, an angle, an angular velocity, and an angular acceleration.

9. The vehicle motion control device (2) according to claim 8, wherein the acceleration is any one of a longitudinal acceleration, a lateral acceleration, and a vertical acceleration.

10. The vehicle motion control device (2) according to claim 8, wherein the physical quantity is a maximum value or an integral value.

11. A vehicle motion control method comprising:

a step of predicting a physical quantity related to a vehicle behavior that occurs when a vehicle maintains a reference route (81) toward a predetermined region (71) on a course;
a step of predicting a physical quantity related to a vehicle behavior that occurs when the vehicle shifts to an avoidance route (82) for avoiding the predetermined region (71); and
a step of generating a travel path defined by the reference route (81) or the avoidance route (82) in which the physical quantity is smaller than a defined value.

**Patentansprüche**

1. Fahrzeugbewegungssteuerungsvorrichtung (2), umfassend:

einen Fahrzeugverhaltensvorhersageabschnitt (22c), der eine physikalische Größe in Bezug auf ein Fahrzeugverhalten vorhersagt, das auftritt, wenn ein Fahrzeug eine Referenzroute (81) zu einem vorbestimmten Bereich (71) auf einem Kurs beibehält, und eine physikalische Größe in Bezug auf ein Fahrzeugverhalten vorhersagt, das auftritt, wenn das Fahrzeug zu einer Ausweichroute (82) zum Ausweichen des vorbestimmten Bereichs (71) wechselt; und
einen Wegerzeugungsabschnitt (22f), der einen durch die Referenzroute (81) oder die Ausweichroute (82) definierten Fahrweg erzeugt, in dem die physikalische Größe kleiner als ein definierter Wert ist.

2. Fahrzeugbewegungssteuerungsvorrichtung (2) nach Anspruch 1, wobei der Wegerzeugungsabschnitt (22f) einen Fahrweg erzeugt, in dem eine Summe der physikalischen Größen minimiert ist.

3. Fahrzeugbewegungssteuerungsvorrichtung (2) nach Anspruch 2, wobei
der Wegerzeugungsabschnitt (22f) einen Fahrweg zum Beibehalten der Referenzroute (81) in einem Fall erzeugt, in dem eine Summe von physikalischen Größen in Bezug auf ein Fahrzeugverhalten, das zum Zeitpunkt des Beibehaltens der Referenzroute (81) auftritt, gleich einer Summe von physikalischen Größen in Bezug auf ein Fahrzeugverhalten ist, das zum Zeitpunkt des Wechselns zu der Ausweichroute (82) auftritt.

4. Fahrzeugbewegungssteuerungsvorrichtung (2) nach Anspruch 1, wobei der Wegerzeugungsabschnitt (22f) einen Fahrweg erzeugt, in dem ein Bewertungswert (Q), der durch eine Bewertungsfunktion berechnet wird, in der eine durch den Fahrzeugverhaltensvorhersageabschnitt (22c) vorhergesagte physikalische Größe als ein Zähler eingestellt ist und ein Koeffizient in Bezug auf ein Fahrzeugverhalten als ein Nenner eingestellt ist, minimiert ist.

5. Fahrzeugbewegungssteuerungsvorrichtung (2) nach Anspruch 4, wobei, wenn ein Bewertungswert zum Zeitpunkt des Beibehaltens der Referenzroute (81) gleich einem Bewertungswert zum Zeitpunkt des Wechselns zu der Ausweichroute (82) ist, der Wegerzeugungsabschnitt (22f) einen Fahrweg zum Beibehalten der Referenzroute (81) erzeugt.

6. Fahrzeugbewegungssteuerungsvorrichtung (2) nach Anspruch 4 oder 5, wobei der Koeffizient ein Koeffizient unter Berücksichtigung von mindestens einem von einem Straßenoberflächenfahrzustand, einem Fahrzeugzustand und Fahrkomfort ist.

7. Fahrzeugbewegungssteuerungsvorrichtung (2) nach Anspruch 1, wobei, wenn sowohl die physikalische Größe in Bezug auf das Fahrzeugverhalten, das zum Zeitpunkt des Beibehaltens der Referenzroute (81) auftritt, als auch die physikalische Größe in Bezug auf das Fahrzeugverhalten, das zum Zeitpunkt des Wechselns zu der Ausweichroute (82) auftritt, größer als ein definierter Wert sind, der Wegerzeugungsabschnitt (22f) einen Fahrweg erzeugt, der durch die Referenzroute (81) verläuft und die minimale physikalische Größe aufweist.

8. Fahrzeugbewegungssteuerungsvorrichtung (2) nach Anspruch 1, wobei die physikalische Größe eine beliebige von Zeit, Verschiebung, einer Geschwindigkeit, einer Beschleunigung, einem Ruck, einem Winkel, einer Winkelgeschwindigkeit und einer Winkelbeschleunigung ist.

9. Fahrzeugbewegungssteuerungsvorrichtung (2) nach Anspruch 8, wobei die Beschleunigung eine beliebige von einer Längsbeschleunigung, einer Querbeschleunigung und einer Vertikalbeschleunigung ist.

10. Fahrzeugbewegungssteuerungsvorrichtung (2) nach Anspruch 8, wobei die physikalische Größe ein Maximalwert oder ein Integralwert ist.

11. Fahrzeugbewegungssteuerungsverfahren, umfassend:

einen Schritt des Vorhersagens einer physikalischen Größe in Bezug auf ein Fahrzeugverhalten, das auftritt, wenn ein Fahrzeug eine Referenzroute (81) zu einem vorbestimmten Bereich (71) auf einem Kurs beibehält;
einen Schritt des Vorhersagens einer physikalischen Größe in Bezug auf ein Fahrzeugverhalten, das auftritt, wenn das Fahrzeug zu einer Ausweichroute (82) zum Ausweichen des vorbestimmten Bereichs (71) wechselt; und
einen Schritt des Erzeugens eines durch die Referenzroute (81) oder die Ausweichroute (82) definierten Fahrwegs, in dem die physikalische Größe kleiner als ein definierter Wert ist.

**Revendications**

1. Dispositif de commande de mouvement de véhicule (2) comprenant :

une partie de prédiction de comportement de véhicule (22c) qui prédit une quantité physique liée à un comportement de véhicule qui se produit lorsqu'un véhicule maintient un itinéraire de référence (81) vers une région prédéterminée (71) sur une trajectoire et une quantité physique liée à un comportement de véhicule qui se produit lorsque le véhicule se déplace vers un itinéraire d'évitement (82) pour éviter la région prédéterminée (71) ; et
une partie de génération de trajet (22f) qui génère un trajet de déplacement défini par l'itinéraire de référence (81) ou l'itinéraire d'évitement (82) dans lequel la quantité physique est inférieure à une valeur définie.

2. Dispositif de commande de mouvement de véhicule (2) selon la revendication 1, dans lequel la partie de génération de trajet (22f) génère un trajet de déplacement dans lequel une somme des quantités physiques est minimisée.

**3.** Dispositif de commande de mouvement de véhicule (2) selon la revendication 2, dans lequel la partie de génération de trajet (22f) génère un trajet de déplacement pour maintenir l'itinéraire de référence (81) dans un cas où une somme de quantités physiques liées à un comportement de véhicule qui se produit au moment du maintien de l'itinéraire de référence (81) est égale à une somme de quantités physiques liées à un comportement de véhicule qui se produit au moment du déplacement vers l'itinéraire d'évitement (82).

**4.** Dispositif de commande de mouvement de véhicule (2) selon la revendication 1, dans lequel la partie de génération de trajet (22f) génère un trajet de déplacement dans lequel une valeur d'évaluation (Q) calculée par une fonction d'évaluation dans laquelle une quantité physique prédite par la partie de prédiction de comportement de véhicule (22c) est définie comme un numérateur, et un coefficient lié à un comportement de véhicule est défini comme un dénominateur est minimisée.

**5.** Dispositif de commande de mouvement de véhicule (2) selon la revendication 4, dans lequel lorsqu'une valeur d'évaluation au moment du maintien de l'itinéraire de référence (81) est égale à une valeur d'évaluation au moment du déplacement vers l'itinéraire d'évitement (82), la partie de génération de trajet (22f) génère un trajet de déplacement pour maintenir l'itinéraire de référence (81).

**6.** Dispositif de commande de mouvement de véhicule (2) selon la revendication 4 ou 5, dans lequel le coefficient est un coefficient en considération d'au moins l'un d'un état de surface de route de déplacement, d'un état de véhicule, et d'un confort de conduite.

**7.** Dispositif de commande de mouvement de véhicule (2) selon la revendication 1, dans lequel, lorsque à la fois la quantité physique liée au comportement de véhicule qui se produit au moment du maintien de l'itinéraire de référence (81) et la quantité physique liée au comportement de véhicule qui se produit au moment du déplacement vers l'itinéraire d'évitement (82) sont supérieures à une valeur définie, la partie de génération de trajet (22f) génère un trajet de déplacement qui passe à travers l'itinéraire de référence (81) et a la quantité physique minimale.

**8.** Dispositif de commande de mouvement de véhicule (2) selon la revendication 1, dans lequel la quantité physique est l'un quelconque d'un temps, d'un déplacement, d'une vitesse, d'une accélération, d'une secousse, d'un angle, d'une vitesse angulaire, et d'une accélération angulaire.

**9.** Dispositif de commande de mouvement de véhicule (2) selon la revendication 8, dans lequel l'accélération est l'une quelconque d'une accélération longitudinale, d'une accélération latérale, et d'une accélération verticale.

**10.** Dispositif de commande de mouvement de véhicule (2) selon la revendication 8, dans lequel la quantité physique est une valeur maximale ou une valeur intégrale.

**11.** Procédé de commande de mouvement de véhicule comprenant :

une étape de prédiction d'une quantité physique liée à un comportement de véhicule qui se produit lorsqu'un véhicule maintient un itinéraire de référence (81) vers une région prédéterminée (71) sur une trajectoire ;
une étape de prédiction d'une quantité physique liée à un comportement de véhicule qui se produit lorsque le véhicule se déplace vers un itinéraire d'évitement (82) pour éviter la région prédéterminée (71) ; et
une étape de génération d'un trajet de déplacement défini par l'itinéraire de référence (81) ou l'itinéraire d'évitement (82) dans lequel la quantité physique est inférieure à une valeur définie.

# FIG. 1

IN-VEHICLE SYSTEM 1

EXTRA-VEHICULAR COMMUNICATION DEVICE 11

GNSS 12

MAP INFORMATION STORAGE UNIT 13

SENSOR 14

HMI UNIT 15

VEHICLE MOTION CONTROL DEVICE 2

OPERATION MANAGEMENT UNIT 21

TRAVEL PATH GENERATION UNIT 22

TRAVEL CONTROL UNIT 23

POWERTRAIN SYSTEM 3

BRAKE SYSTEM 4

STEERING SYSTEM 5

# FIG. 2

22

TRAVEL PATH GENERATION UNIT

INFORMATION ACQUISITION PORTION 22a

TRAVEL REGION INFORMATION CALCULATION PORTION 22b

VEHICLE BEHAVIOR PREDICTION PORTION 22c

ACTION EXTRACTION PORTION 22d

ACTION DETERMINATION PORTION 22e

TRAVEL PATH GENERATION PORTION 22f

# FIG. 3

# FIG. 4

## FIG. 5

START

S1
ACQUIRE INFORMATION

R1

S11
AVOIDANCE BEHAVIOR
> DEFINED VALUE

NO

YES

S13
REFERENCE BEHAVIOR
> DEFINED VALUE

NO

S15
REFERENCE BEHAVIOR
≤ AVOIDANCE BEHAVIOR

NO

YES

YES

S12
MAINTAIN REFERENCE ROUTE

S14
SHIFT TO AVOIDANCE ROUTE

END

15

*FIG. 6*

START

↓ S1

ACQUIRE INFORMATION

R2

↓ S21

CALCULATE VEHICLE BEHAVIOR SUM

↓ S22

REFERENCE BEHAVIOR SUM ≤ AVOIDANCE BEHAVIOR SUM

YES → S23 | NO → S24

MAINTAIN REFERENCE ROUTE | SHIFT TO AVOIDANCE ROUTE

END

*FIG. 7*

START

↓ S1

ACQUIRE INFORMATION

R3

↓ S31

CALCULATE EVALUATION VALUE

↓ S32

REFERENCE EVALUATION VALUE ≤ AVOIDANCE EVALUATION VALUE

YES → S33 | NO → S34

MAINTAIN REFERENCE ROUTE | SHIFT TO AVOIDANCE ROUTE

END

# FIG. 8

# FIG. 9

# FIG. 10

**REFERENCES CITED IN THE DESCRIPTION**

**Patent documents cited in the description**

- JP 2009248909 A
- DE 102019003430 B
- DE 102012018122 A